Europäisches Patentamt

European Patent Office

Office européen des brevets

(19)

(11) Numéro de publication : **0 324 689 B1**

(12) **FASCICULE DE BREVET EUROPEEN**

(45) Date de publication du fascicule du brevet :
23.12.92 Bulletin 92/52

(51) Int. Cl.⁵ : **A01G 31/00, D21B 1/30**

(21) Numéro de dépôt : **89400087.6**

(22) Date de dépôt : **11.01.89**

(54) **Procédé, produit et installation de réalisation du produit servant de support de culture.**

(30) Priorité : **13.01.88 FR 8800325**

(43) Date de publication de la demande :
**19.07.89 Bulletin 89/29**

(45) Mention de la délivrance du brevet :
**23.12.92 Bulletin 92/52**

(84) Etats contractants désignés :
**BE CH DE ES GB GR LI LU NL SE**

(56) Documents cités :
**EP-A- 0 070 782
EP-A- 0 077 510
WO-A-85/03192
FR-A- 2 248 780**

(73) Titulaire : **WOGEGAL SA
Tour Elf 2 Place de la Coupole La Défense 6
F-92400 Courbevoie (FR)**

(72) Inventeur : **Theuveny, Christian
Chemin des Heuleux
F-78240 Chambourcy (FR)**

(74) Mandataire : **Timoney, Ian Charles Craig
SOCIETE NATIONALE ELF AQUITAINE
Departement Propriété Industrielle Tour Elf
Cedex 45
F-92078 Paris La Défense (FR)**

Jouve, 18, rue Saint-Denis, 75001 PARIS

EP 0 324 689 B1

## Description

L'invention a pour objet un procédé et une installation de réalisation d'un produit constitué d'un mélange de fibres enchevêtrées, et susceptible de constituer notamment un support utilisable pour la culture hors-sol.

L'invention couvre également le support de culture réalisé selon le procédé.

Il est devenu maintenant assez courant de pratiquer, dans certaines conditions, la culture "hors-sol", c'est-à-dire sur un support réalisé à cet effet et non pas sur un terrain naturel. De tels supports peuvent être réalisés à partir de différentes matières, organiques ou non, telles que matières plastiques, sable, argile expansée, compost, sciure, copeaux, etc...

D'une façon générale, un support de culture hors-sol doit présenter un certain nombre de propriétés physiques, chimiques et biologiques. En effet, le support doit, d'une part, maintenir les racines et, d'autre part, permettre la circulation d'air, d'eau et de fertilisant. En outre, il doit être de préférence imputrescible, au moins pendant un certain temps, et, lorsqu'il est composé à partir de produits organiques ou autres, ne pas présenter de phytotoxicité et ne pas favoriser le développement de micro-organismes néfastes pour les plantes. Pour diverses raisons, notamment un coût peu élevé, il est intéressant de réaliser un tel produit à partir de déchets de bois ou autre matière première lignocellulosique.

En particulier, on a déjà proposé d'utiliser comme support de culture hors-sol un produit constitué de fibres de bois obtenues par défibrage de copeaux de bois. Cette opération est réalisée par la méthode dite "thermomécanique" utilisée couramment pour la fabrication de pâte à papier, et dans laquelle les copeaux sont soumis à une cuisson à la vapeur puis passent dans un défibreur à disques en présence de vapeur d'eau sous pression.

On obtient ainsi un mélange dans lequel la proportion d'eau est très importante et qui doit être pressé et séché lorsque le lieu d'utilisation est éloigné du lieu de production, pour que le transport ne soit pas trop onéreux.

L'utilisation de machines déjà connues pour la fabrication de pâte à papier est intéressante puisque de telles machines existent dans le commerce et que l'on en connaît bien le fonctionnement et les réglages. Cependant, les propriétés demandées à une pâte de fibres cellulosiques pour la fabrication de pâte à papier ne sont pas obligatoirement celles que l'on attend d'un produit destiné à la réalisation d'un support de culture.

L'invention a pour objet, en revanche, un nouveau procédé et une installation permettant d'effectuer le défibrage de copeaux de bois dans les conditions spécialement adaptées à l'obtention d'un produit présentant un ensemble de qualités particulièrement intéressantes pour la réalisation d'un support de culture hors-sol.

L'invention porte également sur le produit nouveau ainsi réalisé. Le document FR-A-2248780 décrit un produit comportant toutes les caractéristiques du préambule de la revendication 22.

Conformément à l'invention, on réalise le produit par un procédé présentant les caractéristiques de la revendication 1.

Le support de culture selon l'invention est constitué d'un mélange enchevêtré de fibres de bois isolées et de faisceaux agglomérés de fibres de longueurs variées et de granulométrie telle qu'au moins 60 % du mélange est retenue par un tamis de 14 Mesh, et que la proportion de fines passant au tamis de 200 Mesh est inférieure à 10 % et dont les éléments sont reliés entre eux de façon discontinue par des points de colle espacés, et est sous forme d'un tronçon profilé solide, de section et de longueur déterminée.

De façon avantageuse, les conditions de défibrage sont réglées de façon à obtenir un mélange de fibres dont les longueurs peuvent aller de quelques microns à un centimètre environ.

L'invention repose sur l'idée qu'au lieu de réaliser le défibrage de la façon utilisée couramment pour la fabrication de pâte à papier, c'est-à-dire dans des défibreurs ou raffineurs à disques, il serait plus intéressant, pour l'obtention des propriétés particulières recherchées, d'utiliser un autre procédé moins connu, proposé assez récemment, et dans lequel le défibrage des copeaux est réalisé par passage dans une machine à vis de même type que celles qui sont utilisées pour la réalisation et l'extrusion de matières plastiques.

Une telle machine, comportant les caractéristiques du préambule de la revendication 11 est décrite en particulier dans le brevet français 2.319.737 et comprend au moins deux vis à axes parallèles, entraînées en rotation à l'intérieur d'un fourreau et munies de filets hélicoïdaux engrenant l'un dans l'autre de façon à entraîner les copeaux entre une extrémité amont et une extrémité aval du fourreau, où sont ménagés, respectivement, un orifice d'introduction des copeaux et un orifice d'évacuation de la matière défibrée, les vis étant constituées de zones successives accolées munies de filets à pas variés.

On connaît un procédé selon EP-A-0070882 pour la réalisation d'une pâte de fibres cellulosiques dans lequel on réalise le défibrage par passage des copeaux dans une telle machine à au moins deux vis entraînées en rotation à l'intérieur d'un fourreau qui les enveloppe et munies de filets à pas variés. L'obtention d'une telle pâte nécessite toutefois l'élimination complète des bûchettes et amas de fibres non complètement défibrées par passage dans au moins deux zones supplémentaires de traitement. Ce procédé comporte toutes les étapes du préambule de la revendication 1.

Pour réaliser le mélange de fibres présentant les propriétés requises selon l'invention, l'appareil se distingue par le fait qu'il y a seulement une zone d'entraînement (C) et une zone de freinage (D) à pas inversé supplémentaires avec des fenêtres plus étroites que celles de la première zone de freinage (B) et en ce qu'elle comporte des moyens 17 d'introduction dans la machine 1 d'un liant adhésif à durcissement contrôlable avec un débit réglable en fonction des conditions de transport dans les vis pour qu'il se répartisse dans le mélange de fibres de façon discontinue.

De préférence, les fenêtres des filets à pas inversé ont une largeur de l'ordre de 15 à 20 millimètres dans la première zone de freinage et de 12 à 15 millimètres dans la seconde zone de freinage.

D'autre part, la machine est munie avantageusement de moyens de régulation de la température de la matière entraînée qui permettent de régler celle-ci à un niveau supérieur à 100°C, de préférence compris entre 120 et 140°, dans la première zone d'entraînement, la température de la matière étant ensuite diminuée jusqu'à un niveau inférieur à 100°C avant l'introduction du liant adhésif et maintenue à ce niveau jusqu'à la sortie de la machine, de façon à éviter le durcissement du liant qui se produit, normalement, par polymérisation.

La matière défibrée ainsi réalisée pourrait être utilisée telle quelle. Cependant, selon une autre caractéristique particulièrement avantageuse, l'installation comprend, après la sortie de la machine de défibrage, des moyens de répartition et de conformation du mélange de fibres sous forme d'un bloc rigide de dimensions déterminées.

De préférence, des moyens de refroidissement rapide et de séchage partiel du mélange sont interposés entre la machine de défibrage et les moyens de conformation. Ces moyens de refroidissement et de séchage peuvent avantageusement être constitués par une gaine de transport parcourue par un courant de gaz, munie à son extrémité amont d'un orifice d'introduction du mélange sortant de la machine de défibrage et débouchant à son extrémité aval dans un cyclone comprenant une cheminée d'évacuation du gaz chargé d'humidité et un orifice inférieur d'évacuation du mélange refroidi et asséché.

Dans un mode de réalisation préférentiel, les moyens de répartition et de conformation du mélange comprennent une table vibrante alimentée en continu par le mélange défibré pour le tassage de ce dernier, suivi d'une table de conformation munie de moyens de profilage du mélange sous forme d'une barre continue de largeur et d'épaisseur déterminées. La table de conformation est en outre suivie d'une zone de séchage et de polymérisation de l'adhésif par chauffage de la barre à une température de l'ordre de 130°C. Ensuite, la barre continue ainsi produite peut être découpée en tronçons de dimensions déterminées.

On réalise ainsi un support de culture à base de fibres de bois constitué d'un mélange de fibres enchevêtrées de granulométrie étendue et reliées entre elles par des points de colle répartis de façon aléatoire et discontinue, l'ensemble formant après séchage une structure aérée et relativement rigide. Par ailleurs, le mélange peut être mis sous forme de tronçons profilés solides, de section et de longueur déterminées en fonction de l'usage et des conditions de commercialisation. Chaque tronçon est avantageusement placé dans un film en matière synthétique susceptible de retenir les liquides et de laisser passer l'air.

Mais l'invention sera mieux comprise par la description suivante d'un mode de réalisation particulier donné à titre d'exemple et illustré par les dessins annexés.

La Figure 1 est une vue en coupe longitudinale de la machine de défibrage.

La Figure 2 est une vue de dessus de la machine, avec enlèvement partiel du fourreau.

La Figure 3 est une vue générale schématique de l'installation de fabrication du produit.

La Figure 4 est une vue schématique en perspective des moyens de conformation du produit.

La Figure 5 représente schématiquement, à échelle agrandie, un mélange de fibres enchevêtrées.

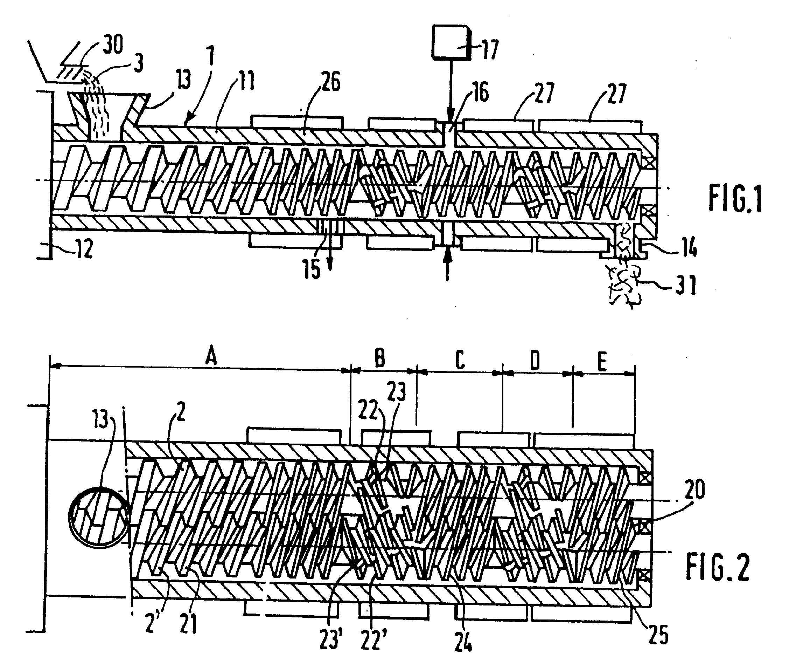

Sur la Figure 1, on a représenté une machine (1) de défibrage à vis adaptée pour la mise en oeuvre du procédé. La machine comprend essentiellement deux vis (2) et (2') à axes parallèles et munies de filets hélicoïdaux engrenant les uns dans les autres, l'entraxe des vis étant inférieur au diamètre extérieur des filets. Les deux vis sont placées à l'intérieur d'un fourreau (11) dont la paroi interne est constituée de deux faces cylindriques sécantes, de même entraxe que les vis de façon à envelopper celles-ci.

Les deux vis sont entraînées en rotation autour de leurs axes respectifs par un groupe d'entraînement (12). Il résulte de cette rotation et de l'engrènement des vis un effet d'entraînement (de la gauche vers la droite sur la Figure) de la matière introduite par un orifice d'alimentation (13) ménagé à une extrémité amont du fourreau. Cet orifice (13), centré dans le plan médian de symétrie de la machine, s'ouvre largement sur les deux vis et peut avantageusement avoir un diamètre de l'ordre de l'entraxe des vis.

La matière ainsi entraînée vers l'aval est évacuée par un orifice (14) placé à l'autre extrémité du fourreau. Dans cette application, on ne recherche pas d'effet d'extrusion et, par conséquent, l'orifice (14) peut simplement s'ouvrir vers le bas. De ce fait, les arbres portant les deux vis sont montés rotatifs dans des paliers placés aux deux extrémités du fourreau.

Comme on l'a indiqué, les machines à vis présentent un certain nombre d'avantages particuliers qui sont mis à profit pour la mise en oeuvre de l'invention.

Tout d'abord, il est connu, dans ce genre de machines, de réaliser les filets des vis sous forme de tronçons accolés enfilés les uns à la suite des autres sur les arbres, ceux-ci étant cannelés de façon à être solidarisés en rotation avec les filets. De plus, les deux vis peuvent être retirées du fourreau de façon assez simple, par exemple par coulissement ou en réalisant un fourreau ouvrant. Il en résulte que l'on peut changer assez facilement les longueurs, les pas et le nombre de filets des différents tronçons accolés de façon à modifier la composition des vis en fonction du résultat recherché. En outre, comme le temps de passage de la matière de l'extrémité amont jusqu'à l'extrémité aval est très rapide, on connaît presque immédiatement le résultat d'une composition de filets et d'une modification des autres paramètres du procédé, vitesse de rotation des vis, réglage des températures, débits d'alimentation en matière et en eau, etc... On peut ainsi, en contrôlant à chaque fois le résultat des modifications apportées, régler les différentes caractéristiques du processus de traitement des copeaux, le résultat recherché étant obtenu de façon à peu près constante si la matière première introduite dans la machine conserve sensiblement les mêmes caractéristiques.

C'est ainsi que l'on a pu mettre au point une composition des vis spécialement adaptée à la mise en oeuvre du procédé selon l'invention.

Comme on l'a indiqué sur la Figure, chaque vis comprend essentiellement, de son extrémité amont à son extrémité aval dans le sens d'avancement de la matière, une première zone d'entraînement vers l'aval et de compression progressive A, une première zone de freinage B, une seconde zone d'entraînement vers l'aval C, une seconde zone de freinage D et une troisième zone d'entraînement vers l'aval E, dans laquelle se réalise l'évacuation du produit.

La première zone A, qui peut s'étendre sur une partie notable, de l'ordre de la moitié, du fourreau (11), peut aussi être contituée de tronçons accolés à pas différents et comprend normalement une première section à pas assez large qui permet d'entraîner rapidement vers l'aval la matière première, introduite par l'orifice d'alimentation (13). Cette matière première sera constituée normalement de copeaux de bois humidifiés ou étuvés, mais d'autres matières lignocellulosiques pourraient éventuellement être utilisées. Le débit d'introduction peut être réglé, par exemple, par un doseur à vis (30) répandant les copeaux (3) en pluie de façon qu'ils se répartissent bien sur les filets passant au-dessous de l'orifice (13).

Après cette première section d'alimentation, le pas des filets (21) de la zone A se resserre de façon à réaliser une compression progressive de la matière entraînée.

Cette compression résulte essentiellement du freinage réalisé dans la première zone de freinage B qui comprend des filets (22) à pas inversé, ce qui signifie que, compte tenu du sens de rotation des vis, ils devraient commander le recul de la matière vers l'orifice (13). Ces filets (22) sont, en outre, munis de plusieurs fenêtres (23) réparties régulièrement autour des axes. On peut, par exemple, rencontrer quatre ou cinq fenêtres sur un tour complet.

Comme les deux vis (2) et (2′) sont entraînées en rotation dans le même sens, les filets se déplacent en sens inverse dans la zone d'engrènement (20) en se râclant mutuellement, et les deux vis (2) et (2′) sont calées de façon que, à intervalles réguliers, deux fenêtres (23) (23′) ménagées respectivement sur les filets (22) (22′) des deux vis (2) et (2′) passent simultanément dans la zone d'engrènement (20). Il en résulte, à intervalles réguliers, l'ouverture et la fermeture d'un orifice traversant les filets (22) (22′) dans le sens longitudinal.

Cette première zone de freinage B est suivie d'une seconde zone d'entraînement C à pas direct. A ce niveau, le fourreau (11) est muni d'un ou plusieurs orifices (16) débouchant à l'entrée de la zone C et reliés à un circuit (17) d'injection d'un adhésif durcissable par polymérisation.

La zone C est suivie d'une seconde zone de freinage D constituée de façon analogue à la première zone B. Normalement, chaque zone de freinage comprend trois filets à pas inversé munis de fenêtres mais celles-ci sont, cependant, un peu plus étroites dans la seconde zone D que dans la première zone B. Par exemple, dans la première zone de freinage B, les fenêtres (23) auront une largeur de l'ordre de 15 à 20 millimètres et de préférence 18 millimètres, et dans la seconde zone de freinage D, elles auront une largeur de 12 à 15 millimètres, et de préférence 14 millimètres. D'une façon générale, ces dimensions seront choisies en fonction du degré de défibrage recherché.

Enfin, en aval de la seconde zone de freinage D, les vis présentent une troisième zone E d'entraînement vers l'aval et sont munies de filets (25) à pas direct relativement large, de façon à réaliser une certaine détente de la matière entraînée qui sort du fourreau en tombant par l'orifice (14) qui s'ouvre largement sur les deux vis.

Selon un autre caractéristique connue dans ce genre de machine à vis, il est possible de réaliser une régulation par zone assez précise de la température de la matière par l'intermédiaire du fourreau. En effet, la matière entraînée vers l'aval par la rotation des vis, se répartit en couche relativement mince tout autour de celles-ci, au contact de la face interne du fourreau, en particulier lorsque les vis sont entraînées en rotation dans le même sens, et il est donc possible en entourant extérieurement le fourreau (11) de jaquettes de chauffage (26) ou de refroidissement (27), de maintenir de façon à peu près constante la température à un niveau déterminé selon la zone et qui peut être contrôlée, par exemple, par des sondes.

Le processus de défibrage utilisé dans cette machine est semblable à celui que l'on avait déjà observé dans les machines à vis utilisées pour la fabrication de pâte à papier.

Les copeaux introduits par l'orifice (13) se répandent dans les filets et sont entraînés vers l'aval, cet entraînement étant réalisé, dans les machines à plusieurs vis, même lorsque les filets ne sont pas complètement remplis.

Après la première zone d'entraînement à pas large qui permet de dépasser les limites de l'orifice (13), la matière se comprime dans les filets, notamment en amont de chaque zone d'engrènement et la pression augmente jusqu'au niveau nécessaire pour dépasser la zone de freinage B à pas inversé. Dans cette zone B, la matière remplit complètement les filets et remonte donc le long de ceux-ci, en tournant autour des axes des deux vis et en passant d'une vis à l'autre dans la zone médiane d'engrènement (20). De plus, un certain débit de matière passe directement vers l'aval en passant par les fenêtres (23) chaque fois que celles-ci viennent en coïncidence dans la zone d'engrènement où la pression est la plus élevée.

Il en résulte, par combinaison d'effets de compression, de torsion et de cisaillement, un fractionnement des copeaux avec un effet de défibrage particulièrement intense pour la matière passant dans les fenêtres. A la sortie de chaque zone à pas inversé, on obtient donc un mélange de fibres déjà isolées et de copeaux simplement fractionnés.

Dans une machine à vis, le défibrage est donc obtenu par des effets différents de ceux qui sont mis en oeuvre dans les autres procédés mécaniques comme les meules ou les défibreurs à disques qui tournent à grande vitesse et il en résulte une différence de constitution et de consistance de la matière obtenue. En particulier, du fait que, dans les machines à vis, le défibrage est réalisé essentiellement par écrasement et torsion et que les effets obtenus dans les zones de compression, dans les zones à pas inversé et dans les fenêtres, ne sont pas les mêmes, la matière sortant de chaque zone à pas inversé est constituée d'un mélange de copeaux simplement fractionnés, de faisceaux agglomérés et de fibres plus ou moins isolées dont les dimensions et les proportions dépendent des différents paramètres régissant le transport de la matière, notamment le nombre et la largeur des fenêtres.

Pour la fabrication de la pâte à papier, il est souhaitable d'obtenir un mélange assez homogène de fibres aussi isolées que possible et même de réaliser un effet de fibrillation qui favorise l'accrochage des fibres entre elles. C'est pourquoi les machines à vis utilisées pour la fabrication de pâte à papier comportent normalement trois zones de freinage successives à pas inversé munies de fenêtres dont les largeurs diminuent d'une zone à la suivante.

Mais la présente invention a pour objet la préparation d'un produit présentant d'autres propriétés que la pâte à papier et l'on a constaté qu' il était particulièrement intéressant de mettre à profit le mode de fractionnement et de défibrage du bois réalisé dans la machine à vis pour obtenir la consistance et la texture souhaitées sans chercher à effectuer un défibrage complet des copeaux de bois.

Ainsi, en limitant, de préférence, à deux, le nombre de zones de freinage B et D à pas inversé et en choisissant judicieusement les différents paramètres qui agissent sur le défibrage (diamètre, pas et profondeur des filets, nombre et largeur des fenêtres, vitesse de rotation des vis, etc..) on peut obtenir à la sortie de la machine une matière incomplètement défibrée constituée d'un mélange de fibres plus ou moins isolées ou agglomérées en faisceaux et ayant, par conséquent, une granulométrie assez étendue et des longueurs de fibres variées. C'est un tel mélange que, pour simplifier, on appellera "fibres" par la suite. Cette caractéristique est très importante dans le cadre de l'invention, c'est-à-dire pour la réalisation d'un support de culture, car elle permet d'assurer au produit final les qualités d'aération, porosité, rétention en eau et capillarité nécessaires.

Pour obtenir la granulométrie voulue, les caractéristiques de la machine doivent être définies en fonction de la nature de la matière lignocellulosique utilisée. On utilisera des dosses et délignures de bois écorcé et, de préférence, de l'aubier de résineux ou de feuillus à fibres longues et à faible taux de tanin, ces dosses et délignures ayant au moins un à deux mois de stockage avant utilisation et n'ayant pas été traités aux herbicides à la plantation.

Par passage à la coupeuse, on réalise des plaquettes ayant des dimensions de l'ordre de 4 cm X 4 cm X 0,5cm dont le taux de siccité doit être de l'ordre de 0,5 à 0,6 au maximum.

Si la siccité est supérieure à 0,6, il est préférable d'humidifier les plaquettes ou de les étuver légèrement à la vapeur.

Les vis seront entraînées à une vitesse de 250 à 350 tours/minute, ce qui donne un temps de passage dans la machine de quelques secondes seulement.

Le tableau suivant donne un exemple de granulométrie obtenue en utilisant le classement Bauer Mac Nett :

| Tamis (Mesh) | 14 | 28 | 48 | 100 | 200 | Fines |
|---|---|---|---|---|---|---|
| Pourcentage retenu | 61,4 | 11,7 | 9,2 | 5,9 | 3,5 | 8,3 |

Mais le passage des copeaux dans la machine à vis ne permet pas seulement d'en effectuer le défibrage.

Tout d'abord, comme on l'a indiqué, il est possible d'agir sur la température de la matière transportée dans les filets. De préférence, le premier défibrage sera effectué sur des copeaux dont la température aura été élevée jusqu'à un niveau de l'ordre de 120°C au moyen de jaquettes de chauffage (32) couvrant la partie aval de la première zone d'entraînement A et éventuellement le début de la première zone de freinage B. Ce niveau de température permet d'assurer la stérilisation de la matière, particulièrement utile dans le cas d'une utilisation en culture hors-sol. Cependant, la température doit rester inférieure à 140°C pour éviter la production d'acide acétique.

Cette élévation de température favorise, d'autre part, le ramollissement de la résine qui est expulsée du bois du fait du fractionnement et de la compression des copeaux et peut être évacuée, avec une partie de l'eau, par des zones filtrantes (34) ménagées dans la paroi du fourreau (11), un peu en amont de la zone de freinage B.

A la sortie de cette zone, la matière se détend dans la zone C à pas direct élargi où elle se mélange avec un liant introduit par les orifices (16) et constitué, de préférence, d'un adhésif polymérisable, par exemple un mélange d'une résine urée-formol avec une solution aqueuse d'urée et de ClNH4 comme catalyseur de résine. L'introduction de l'adhésif par les orifices (16) se fait par injection sous pression avec un débit réglé en fonction de celui de la matière transportée par les vis, la quantité d'adhésif injectée pouvant être de l'ordre de dix pour cent (10 %) du poids sec de copeaux traité.

Grâce au processus particulier de défibrage réalisé entre les vis, notamment dans la zone D à pas inversé, il est possible, en réglant judicieusement le débit d'injection du liant, de réaliser une répartition discontinue de ce dernier entre les fibres, en évitant que celles-ci soient recouvertes d'un film continu. On réalise ainsi une liaison des fibres par points espacés, qui ne risque pas d'affecter la porosité du produit ni les propriétés de rétention en eau des fibres.

Il est possible également d'introduire par l'orifice (16) ou d'autres orifices, des additifs liquides ou solides destinés à se répandre dans le mélange comme, par exemple, un produit mouillant permettant d'améliorer la rétention en eau immédiate et/ou des microorganismes susceptibles de s'associer aux fibres et favorables à la pousse des plantes.

Le mélange du liant avec les fibres est achevé à la sortie de la seconde zone de freinage D et la dernière zone d'entraînement E permet d'expulser par l'orifice de sortie (14) un produit ayant un degré de siccité compris entre 0,45 et 0,55 et une densité sèche de 40 à 45 kg par m3.

Par ailleurs, le durcissement de l'adhésif est retardé jusqu'à la sortie de la machine grâce aux jaquettes de refroidissement (33) qui permettent d'abaisser et de maintenir la température de la matière à partir de la zone d'injection C à un niveau inférieur à 85°C environ, le mélange sortant de la machine à une température de l'ordre de 75 à 80°C.

On notera que l'expulsion du mélange par l'orifice (14) se fait normalement assez facilement grâce à l'effet de râclage mutuel dans la zone d'engrènement des vis entraînées dans le même sens.

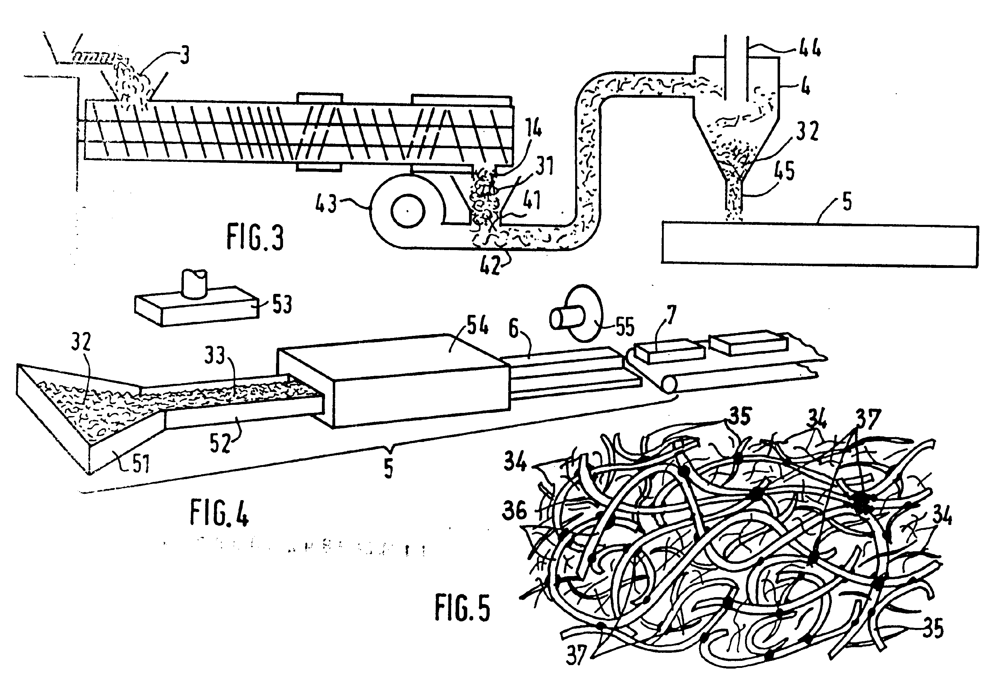

Le produit ainsi obtenu à la sortie de la machine pourrait être simplement conditionné en lots utilisables tels quels. Cependant, il est beaucoup plus avantageux d'incorporer la machine de défibrage à vis qui vient d'être décrite à une installation plus complète représentée schématiquement sur les Figures 3 et 4 et dont la machine à vis (1) constitue la première partie.

En effet, le produit expulsé par l'orifice de sortie (14) tombe dans une trémie (41) débouchant dans une gaine (42) parcourue par un courant de gaz généré par un ventilateur (43). La gaine (42), qui véhicule le mélange de gaz et de produit défibré, débouche tangentiellement dans un cyclone (4) muni d'une cheminée d'évacuation (44) et d'un orifice de sortie inférieur (45).

Le produit (31) qui sort de la machine et tombe dans la gaine (42), se désagrège dans le courant de gaz et parvient dans le cyclone (4) sous forme de fibres en suspension de différentes dimensions. Le gaz s'échappe par la cheminée (44) avec environ dix pour cent (10 %) de l'eau qui était encore contenue dans le produit et les fibres s'accumulent à la base du cyclone (4) et sont évacuées par l'orifice inférieur (45).

Cette aération du produit a permis d'en diminuer encore la température jusqu'à un niveau de 45°C environ.

Par conséquent, la polymérisation de l'adhésif ne s'est pas encore effectuée.

Le mélange de fibre sortant par l'orifice (45) peut donc prendre la forme que l'on veut lui donner et est dirigé à cet effet dans une installation de répartition et de conformation (5).

Sur la Figure 4, on a représenté, à titre d'exemple, une telle installation (5) comprenant une table vibrante (51) qui fait converger le mélange (32) sortant du cyclone (4) vers une table de conformation (52) munie de parois longitudinales entre lesquelles se forme une barre profilée ayant la largeur voulue. La table (52) est associée avantageusement à un dispositif de compression (53) qui permet de donner au profilé (33) la densité et l'épaisseur voulues.

On notera que la constitution particulière de la matière (33) sortant de la machine à vis et comprenant des fibres plus ou moins isolées (34), des faisceaux agglomérés de fibres (35) et des filaments (36) de différentes tailles, favorise tout le processus d'aération, de répartition et de conformation du produit qui, grâce à sa texture enchevêtrée représentée schématiquement sur la Figure 5, peut se tasser dans les trois dimensions pour prendre la forme et l'épaisseur voulues, ces dimensions restant ensuite sensiblement constantes, notamment après la prise du liant.

Jusqu'à ce moment, en effet, la température du mélange (31, 32, 33) avait été maintenue à un niveau trop bas pour permettre le durcissement du liant, ce qui a permis la mise en forme du produit. Après obtention des dimensions voulues, on va donc élever la température à un niveau supérieur à 100°C, permettant d'assurer la polymérisation du liant. Ce dernier se durcit et l'on obtient un produit dont la texture a été montrée schématiquement, à échelle agrandie, sur la Figure 5, et constitué de fibres (36) de longueurs et de granulométries diverses, reliées entre elles de façon aléatoire par des points de colle espacés (37). Il en résulte une structure relativement rigide et cependant aérée particulièrement favorable à la tenue et au développement des racines et permettant la circulation des liquides et de l'air.

Cette élévation de la température est réalisée en faisant passer le profilé (33) dans un four de séchage (54) fonctionnant, par exemple, par circulation d'air chaud pulsé et/ou par micro-ondes, et dans lequel la température est élevée à un niveau de l'ordre de 120 à 130°C pour assurer la polymérisation du liant. Il en résulte également une certaine élimination de l'eau et l'on obtient, à la sortie du four, un produit (6) contenant de cinq à dix peur cent (5 à 10 %) d'humidité résiduelle et ayant une densité apparente de 80 kg par m3 + 20 %.

Le produit profilé (6) se refroidit à la sortie du four (54) et est enfin divisé par un dispositif de coupe (55) en blocs ou "pains" (7) de longueur déterminée.

Ces pains (7) qui sont relativement rigides peuvent alors être conditionnés et emballés en fonction des besoins.

Dans un mode de réalisation particulièrement intéressant, les pains (7), qui peuvent avoir par exemple une longueur de 1 mètre, une largeur de 20 centimètres et une épaisseur de 8 centimètres, sont placés dans une enveloppe constituée d'une feuille de matière plastique du type utilisé pour la culture et retenant les liquides.

Une telle enveloppe doit être, de préférence, opaque, insensible aux ultra-violets et de qualité alimentaire.

On peut ainsi réaliser des produits prêts à l'usage, l'enveloppe en matière plastique permettant de contenir un liquide nutritif dans le pain de fibres enchevêtrées servant de support aux racines.

Ainsi, alors que, jusqu'à présent, les supports de culture connus étaient principalement produits en vrac et destinés essentiellement à être mélangés à un sol naturel, l'invention permet au contraire de mettre dans le commerce des produits rigides de dimensions déterminées et déjà enveloppés d'un film étanche. De tels produits présentent l'avantage d'une grande facilité de manipulation et d'utilisation. Comme ils sont légers et faciles à transporter, on peut les poser et les ranger en un endroit quelconque, ménager des trous pour y planter, par exemple, des boutures, puis introduire simplement le liquide nutritif dans l'enveloppe.

En outre, grâce au degré de rigidité obtenu par le collage par points des fibres enchevêtrées, il n'y a pas de risque de tassage naturel du support qui conserve ses propriétés de porosité au cours du temps.

Tout au long de la fabrication, on a pu contrôler avec précision aussi bien la granulométrie des fibres que leur taux d'humidité et la stérilisation effectuée au cours de la fabrication permet d'obtenir un produit biologiquement neutre.

Le contrôle des caractéristiques physico-chimiques du produit permet de garantir le maintien dans le temps des propriétés requises et, notamment, pH, plages de rétention, capacités de drainage, mouillabilité.

Un autre avantage important de ce nouveau support hors-sol est son caractère organique et biodégradable qui permet l'utilisation sans problèmes pour plusieurs cultures.

En fin de culture, il est possible d'introduire le support dans des mélanges type terreaux pour amender les sols ou bien de le brûler.

Par ailleurs, l'apport d'Urée, donc d'Azote, dans le liant ainsi que, éventuellement, d'autres adjuvants utilisés comme catalyseurs ou non, joue le rôle d'engrais retard et est donc bénéfique pour la croissance des plantes.

Bien entendu, l'invention n'est pas limitée strictement aux détails du mode de réalisation qui vient d'être

EP 0 324 689 B1

décrit et couvre également les variantes restant dans le cadre de protection défini dans les revendications.

En particulier, la machine de défibrage à vis a été décrite dans son état le plus simple pour l'obtention du résultat recherché, mais il ne serait pas interdit d'utiliser certaines de ses possibilités pour effectuer, par exemple, d'autres traitements sur les copeaux de bois. D'autre part, les différents moyens de séchage, de répartition et de conformation de la matière défibrée, pourraient être remplacés par des dispositifs équivalents. En particulier, le séchage de la matière sortant de la machine de défibrage pourrait être réalisé, par exemple, sur une table filtrante et la conformation du produit pourrait être faite dans des moules individuels.

## Revendications

1. Procédé de réalisation d'un produit composite obtenu par défibrage de copeaux de bois ou autre matière première lignocellulosique, du type consistant à réaliser le défibrage par passage des copeaux (3) dans une machine (1) comprenant au moins deux vis (2) à filets identiques engrenant l'une dans l'autre entraînés en rotation à l'intérieur d'un fourreau (11) qui les enveloppe comprenant un orifice avant (13) d'entrée des copeaux et un orifice aval (14) de sortie de la matière après défibrage, et des parties filtrantes (15) pour l'essorage, et munies de filets à pas successivement directs et inverses de façon à déterminer une succession de zones d'entraînement à pas direct et de zones de compression à pas inverse, les filets à pas inversés étant munis de fenêtres, caractérisé en ce que, pour la réalisation d'un produit particulièrement adapté à la réalisation d'un support de culture hors-sol, on règle l'ensemble des caractéristiques de transport de la matière entraînée de façon à réaliser un degré de défibrage contrôlé permettant d'obtenir, à la sortie de la machine (1), un mélange (31) de fibres isolées et de faisceaux agglomérés de fibres partiellement défibrés, de longueurs et de granulométrie variées, que l'on introduit un liant adhésif dans le fourreau (11) au cours du défibrage avec un débit réglé en fonction du débit de la matière transportée pour qu'il se répartisse dans ledit mélange de fibres de façon discontinue, et que, par contrôle de la température de la matière entraînée, on retarde le durcissement du liant adhésif de façon que celui-ci se produise seulement après la sortie de la machine (1).

2. Procédé selon la revendication 1, caractérisé par le fait que l'on règle les conditions de défibrage de façon à obtenir un mélange de fibres dont les longueurs peuvent aller de quelques microns jusqu'à un centimètre environ.

3. Procédé selon la revendication 2, caractérisé par le fait que le mélange obtenu est constitué de fibres plus ou moins isolées, d'agglomérés de fibres et de filaments dont la granulométrie est telle qu'au moins 60 % du mélange soit retenu au tamis de 14 et que la proportion de fines passant au tamis de 200 soit inférieure à 10 %.

4. Procédé selon la revendication 1, caractérisé par le fait que l'on réalise, au moins dans la première partie de la machine de défibrage à vis, une compression progressive avec trituration et fractionnement des copeaux, au cours de laquelle on évacue, par les parties filtrantes (15) ménagées dans le fourreau (11) au moins une partie de la résine et de l'eau liées aux copeaux, pour atteindre un degré de siccité compris entre 0,45 et 0,55.

5. Procédé selon l'une des revendications précédentes, caractérisé par le fait que, dans la première phase de compression progressive, on effectue une stérilisation des copeaux par élévation de leur température à un niveau compris entre 120°C et 140°C.

6. Procédé selon l'une des revendications 1 et 5, caractérisé par le fait qu'avant introduction du liant adhésif, on diminue la température du mélange entraîné jusqu'à un niveau interdisant le durcissement du liant et que l'on maintient cette température au moins jusqu'à la sortie de la machine de défibrage (1).

7. procédé selon l'une des revendications précédentes, du type consistant à introduire dans le fourreau (11), au cours du défibrage, un ou plusieurs additifs liquides ou solides, caractérisé en ce que les additifs sont un produit mouillant et/ou des micro-organismes favorisant la pousse des plantes.

8. Procédé selon l'une des revendications précédentes, caractérisé par le fait qu'après la sortie de la machine de défibrage, on réalise un refroidissement et un séchage du mélange (31) jusqu'à une température inférieure à 50°C et un degré de siccité de l'ordre de 0,6.

8

9. Procédé selon l'une des revendications précédentes, caractérisé par le fait que le mélange (31) sortant de la machine (1) de défibrage est conformé par moulage et/ou profilage en un produit (33) de dimensions et de densité déterminées dont la température est élevée ensuite à un niveau supérieur à 100°C de façon à fixer lesdites dimensions par durcissement de l'adhésif.

10. Procédé selon la revendication 9, caractérisé par le fait que l'on réalise en continu un profilé (6) qui est ensuite divisé en pains (7) de longueurs déterminées.

11. Installation de réalisation d'un mélange composite de fibres plus ou moins isolées et de faisceau agglomérés de fibres de longueurs et de granulométrie variées susceptible de constituer un support de culture et obtenu par défibrage partiel de copeaux (3) de bois ou autre matière lignocellulosique en morceaux, du type comprenant une machine (1) de défibrage à au moins deux vis (2) parallèles entraînées en rotation à l'intérieur d'un fourreau qui les enveloppe et munies de filets hélicoïdaux engrenant les uns dans les autres pour l'entraînement de copeaux (3) entre une extrémité amont et une extrémité aval du fourreau (11) munies respectivement d'un orifice (13) d'introduction des copeaux (3) et d'un orifice (14) d'évacuation de la matière après défibrage (31), les vis étant constituées de zones successives accolées munies de filets à pas variés (21, 22, 24, 25), successivement directs puis inverses, les filets à pas inverses étant munis de fenêtres (23), des parties filtrantes (15) étant ménagées dans le fourreau (11), les vis déterminant dans le sens d'avancement de la matière une première zone (A) d'entraînement vers l'aval avec compression progressive et évacuation d'au moins une partie de l'eau associée aux copeaux (3) à travers les parties filtrantes, une première zone de freinage (B) comprenant des filets (22) à pas inversé, et une zone d'entraînement et d'évacuation du mélange obtenu, l'appareil comprenant des moyens de contrôle de la température de la matière entraînée caractérisé en ce qu'il y a seulement une zone d'entraînement (C) et une zone de freinage (D) à pas inversé supplémentaires avec des fenêtres plus étroites que celles de la première zone de freinage (B) et en ce qu'elle comporte des moyens (17) d'introduction dans la machine (1) d'un liant adhésif à durcissement contrôlable avec un débit réglable en fonction des conditions de transport dans les vis pour qu'il se répartisse dans le mélange de fibres de façon discontinue, et une troisième zone (E) d'entraînement et d'évacuation du mélange obtenu.

12. Installation selon la revendication 11, caractérisé par le fait que la machine (1) est équipée de moyens (26) de régulation de la température de la matière entraînée à un niveau permettant la stérilisation de celle-ci dans une zone placée en amont de la zone d'injection du liant adhésif.

13. Installation selon la revendication 11, caractérisée par le fait que la machine (1) est munie de moyens (27) de régulation de la température de la matière entraînée à un niveau inférieur à 100°C depuis la zone (C) d'injection de l'adhésif jusqu'à la sortie de la machine.

14. Installation selon la revendication 11, caractérisée par le fait que les fenêtres (33) des filets (22) à pas inversé ont une largeur de l'ordre de 15 à 20 mm dans la première zone de freinage (B) et de 12 à 15 mm dans la seconde zone de freinage (D).

15. Installation selon l'une des revendications 10 et 11, caractérisée par le fait qu'elle comprend, après la sortie de la machine de défibrage (1), des moyens (5) de répartition et de conformation du mélange de fibres (31) sous forme d'au moins un bloc (7) de dimensions déterminées et sensiblement constantes.

16. Installation selon l'une des revendications 10 et 11, caractérisée par le fait qu'elle comprend des moyens (4) de refroidissement rapide et de séchage partiel du mélange (31) entre la machine de défibrage (1) et les moyens de conformation (5).

17. Installation selon la revendication 16, caractérisée par le fait que les moyens de refroidissement rapide et de séchage du mélange (31) comprennent une gaine de transport (42), parcourue par un courant de gaz, muni à son extrémité amont d'un orifice (41) d'introduction du mélange (31) sortant de la machine de défibrage (1) et débouchant à son extrémité aval dans un cyclone (4) comprenant une cheminée (44) d'évacuation du gaz chargé d'humidité, et un orifice inférieur (45) d'évacuation du mélange refroidi et asséché (32).

18. Installation selon la revendication 15, caractérisée par le fait que les moyens (5) de répartition et de conformation comprennent une table vibrante (51) alimentée en continu par le mélange (32) pour le tassage de ce dernier, suivie d'une table de conformation (52) munie de moyens de profilage du mélange (33) sous forme d'une barre continue (6) de largeur et d'épaisseur déterminées.

19. Installation selon la revendication 15, caractérisée par le fait que la table de conformation (52) est associée à des moyens (53) de compression du mélange (33) pour l'obtention d'une épaisseur et d'une densité déterminées.

20. Installation selon la revendication 18, caractérisée par le fait que la table de conformation (52) est suivie de moyens (55) de découpage de la barre continue (6) en tronçons (7) de longueur déterminée.

21. Installation selon l'une des revendications 17 à 20, caractérisée par le fait que la table de conformation (52) est suivie d'une zone (54) de séchage et de durcissement du liant adhésif par chauffage de la barre (6) à une température de polymérisation de l'ordre de 130°C.

22. Support de culture notamment pour culture hors-sol constitué de particules lignocellulosiques obtenues par défibrage de copeaux de bois et reliées par un liant de façon à former une structure aérée et relativement rigide, caractérisé par le fait qu'il est constitué d'un mélange enchevêtré (31) de fibres de bois isolées et de faisceaux agglomérés de fibres de longueurs variées et de granulométrie telle qu'au moins 60 % du mélange est retenue par un tamis de 14 Mesh, et que la proportion de fines passant au tamis de 200 Mesh est inférieure à 10 % et dont les éléments sont reliés entre eux de façon discontinue par des points de colle (37) espacés et est sous forme d'un tronçon profilé solide (7), de section et de longueur déterminées.

23. Support de culture selon la revendication 22, caractérisé par le fait que chaque tronçon (7) est placé dans une enveloppe fermée constituée d'un film en matière synthétique susceptible de retenir les liquides.

24. Support de culture selon la revendication 23, caractérisé par le fait que les tronçons sont stockés, transportés et livrés à l'état sec, et qu'après la pose de chaque tronçon à un endroit voulu, on y mélange des trous espacés de plantation de boutures dont les racines se développent dans le support sous l'action d'un liquide nutritif introduit dans l'enveloppe.

## Claims

1. Process for producing a composite product obtained by pulping shavings of wood or other primary lignocellular material, of the type consisting of carrying out the pulping by the passage of the shavings (3) through a machine (1) comprising at least two screws (2) with identical threads meshing with one another entrained in rotation in the interior of a sleeve (11) which encases them, and comprises an upstream inlet aperture (13) for the shavings and a downstream outlet aperture (14) for the material after pulping, and filtering pieces (15) for drying, and provided with threads having paths that are successively forward and reversed in such a manner as to form a succession of entrainment zones with forward threads and compression zones with reverse threads, the threads with reverse paths being provided with windows, characterised in that, in order to produce a product particularly suited to the production of a support for non-soil cultivation, all the features for the transport of the entrained material are regulated in such a manner as to produce a controlled degree of pulping, enabling a mixture (31) of individual fibres and of agglomerated bundles of partially pulped fibres, of varied lengths and granular measurements, to be obtained at the outlet from the machine (1), that an adhesive binder is introduced into the sleeve (11) in the course of the pulping at a rate that is controlled as a function of the rate of the transported material for which the fibres are divided in the said mixture in a discontinuous manner, and that, to control the temperature of the entrained material, the hardening of the adhesive binder is delayed in such a manner that it only occurs after the exit from the machine (1).

2. Process according to Claim 1, characterised by the fact that the pulping conditions arm controlled in such a manner as to obtain a mixture of fibres the length of which may vary from a few microns to approximately 1 cm.

3. Process according to Claim 2, characterised by the fact that the mixture obtained is constituted of fibres that are more or less individual, of agglomerations of fibres and of filaments, the granular measurement of which is such that at least 60% of the mixture is retained is a 14-mesh sieve and the proportion of grains passing through a 200-mesh sieve is less than 10%.

4. Process according to Claim 1, characterised by the fact that there is carried out, at least in the first part of the screw pulping machine, a progressive compression with pulverisation and fractionation of the shavings, in the course of which at least one part of the resin and the water contained in the shavings is evacuated via the filtering pieces (15) provided in the sleeve (11), in order to obtain a degree of dryness of between 0.45 and 0.55.

5. Process according to one of the preceding claims, characterised by the fact that, in a first phase of the progressive compression, a sterilization of the shavings is carried out by raising the temperature thereof to a level of between 120°C and 140°C.

6. Process according to one of Claims 1 and 5, characeribed by the fact that, prior to the introduction of the adhesive binder, the temperature of the entrained mixture is reduced to a level that prevents the hardening of the binder and in that this temperature is maintained at least until the output from the pulping machine (1).

7. Process according to one of the preceding claims, of the type consisting of introducing one or several liquid or solid additions into the sleeve (11) during the course of the pulping, characterised in that the additives are a dampening product and/or micro-organisms favouring the sprouting of plants.

8. Process according to one of the preceding claims, characterised by the fact that after the exit from the pulping machine, the mixture (31) is cooled and dried to a temperature of less than 50°C and a degree of dryness of the order of 0.6.

9. Process according to one of the preceding claims, characterised by the fact that the mixture (31) leaving the pulping machine (1) is shaped by molding and/or profiling, into a product (33) of predetermined measurements and density, the temperature of which is then increased to a level of more than 100 °C in order to fix these measurements by hardening the adhesive.

10. Process according to Claim 9, characterised by the fact that a continuous profiled section (6) is produced, which is subsequently divided into panels (7) of predetermined lengths.

11. Installation for producing a composite mixture of fibres that are more or less isolated and of agglomerated bundles of fibres of variable lengths and granular measurements capable of constituting supporting for cultivation and obtained by the partial pulping of shavings (3) of wood or small pieces of other lignocellular material into fragments, of the type comprising a pulping machine (1) with at least two parallel screws (2) entrained in rotation inside a sleeve which encases them and provided with helicoidal threads meshing into one another to entrain the shavings (3) between an upstream end and a downstream end of the sleeve (11), which are provided, respectively, with an aperture (13) for introducing the shavings (3) and an aperture (14) for evacuating the material after pulping (31), the screws being comprised of successive coupled zones provided with threads with different paths (21, 22, 24, 25), successively forward and then reverse, the threads with reverse paths being provided with windows (23), filtering parts (15) being provided in the sleeve (11), the screws determining, in the direction of travel of the material, a first zone (A) of entrainment in the downstream direction with progressive compression and evacuation of at least a part of the water associated with the shavings (3) across the filtering parts, a first braking zone (B) comprising threads (22) with reverse paths, and an entraining and evacuating zone for the mixture obtained, the device comprising means of controlling the temperature of the entrained material, characterised in that there is only one additional entrainment zone (C) and one braking zone (D) with a reverse path having windows that are narrower than those of the first braking zone (B) and in that it comprises means (17) of introducing into the machine (1) an adhesive binder with controllable hardening at a rate that may be regulated as a function of the conditions of travel in the screw in order that it is distributed in the mixture of fibres in a discontinuous manner, and a third zone (E) for entraining and evacuating the mixture obtained.

12. Installation according to Claim 11, characterised by the fact that the machine (1) is provided with means (26) of controlling the temperature of the entrained material, at a level permitting the sterilization thereof, in a zone located upstream of the injection zone of the adhesive binder.

13. Installation according to Claim 11, characterised by the fact that the machine (1) is provided with means (27) of controlling the temperature of the entrained material at a level less than 100°C from the injection zone (C) of the adhesive to the exit from the machine.

14. Installation according to Claim 11, characterised by the fact that the windows (33) of the threads (22) with reverse paths have a size of the order of from 15 to 20 mm in the first braking zone (B) and from 12 to 15 mm in the second braking zone (D).

15. Installation according to one of Claims 10 and 11, characterised by the fact that it comprises, after the exit from the pulping machine (1), means (5) of dividing and forming the mixture of fibres (31) into the shape of at least one block (7) with predetermined and approximately constant measurements.

16. Installation according to one of Claims 10 and 11, characterised by the fact that it comprises means (4) for rapidly cooling and partially drying the mixture (31) between the pulping machine (1) and the shaping means (5).

17. Installation according to Claim 16, characterised by the fact that the means for rapid cooling and drying of the mixture (31), comprising a transport case (42), passed through by a flow of gas, provided at its upstream end with an aperture (41) for introducing the mixture (31) that is output from the pulping machine (1) and which opens at its downstream end, into a cyclone (4) comprising a chimney (44) for the evacuation of gas charged with humidity, and a lower aperture (45) for the evacuation of the cooled and dried mixture (32).

18. Installation according to Claim 15, characterised by the fact that the dividing and shaping means (5) comprise a vibrating table (51) continuously supplied with the mixture (32) for the packing of this latter, followed by a shaping table (52) provided with means for profiling the mixture (33) in the form of a continuous bar (6) of a predetermined length and thickness.

19. Installation according to Claim 15, characterised by the fact that the shaping table (52) is connected with means (53) for compressing the mixture (33) to obtain a predetermined thickness and density.

20. Installation according to Claim 18, characterised by the fact that the shaping table (52) in followed by means (55) for cutting the continuous bar (6) into sections (7) of a predetermined length.

21. Installation according to one of Claims 17 to 20, characterised by the fact that the shaping table (52) is followed by a zone (54) for drying and hardening the adhesive binder by heating the bar (6) to a polymerisation temperature of the order of 130°C.

22. Support for cultivation, in particular for soil-free cultivation, comprising lignocellular particles obtained by pulping wood shavings and connected by a binder in such a way as to form an aerated and relatively rigid structure, characterised by the fact that it is comprised of a tangled mixture (31) of individual wood fibres and agglomerated bundles of fibres of varied lengths and of granular measurements such that at least 60% of the mixture is retained by a 14-mesh sieve, and that the proportion of grains passing through a 200-mesh sieve is less than 10% and of which the elements are connected to one another in a discontinuous manner by spaced points of adhesion (37) and is in the form of a solid profiled section (7) of a predetermined section and length.

23. Support for cultivation according to Claim 22, characterised by the fact that each section (7) is placed in a closed envelope consisting of a film of synthetic material capable of retaining liquid.

24. Support for cultivation according to Claim 23, characterised by the fact that the sections are stored, transported and delivered in the dry condition, and in that, after each section is located in a desired position, the spaced holes, for the planting of the cuttings, are mixed in such a way that the roots develop in the support under the action of a nutrient liquid introduced into the covering.

**Patentansprüche**

1. Verfahren zur Herstellung eines durch Zerfaserung von Holzspänen oder von einem anderen holzzellulosehaltigen Rohstoff gewonnenen Verbundproduktes des Typs, welcher darin besteht, die Zerfaserung mittels Durchgang der Späne (3) in einer Maschine (1) durchzuführen, welche wenigstens
   - zwei Schrauben (2) mit identischen Gewinden, welche ineinander eingreifen und im Inneren einer sie umhüllenden Hülse (11), die eine stromaufwärts gelegene Eintrittsöffnung (13) für die Späne und eine stromabwärts gelegene Austrittsöffnung (14) für das Material nach der Zerfaserung hat, in Drehung versetzt werden, und

- Filtrierteile (15) zum Trockenschleudern aufweist,
- wobei die Schrauben mit Gewinden mit aufeinanderfolgend in eine Richtung gerichteten und entgegengesetzten Steigungen versehen sind, so daß eine Folge von Mitnahmezonen mit in eine Richtung gerichteter Steigung und Kompressionszonen mit entgegengesetzter Steigung bestimmt wird,
- wobei die Gewinde mit entgegengesetzter Steigung mit Fenstern versehen sind,

dadurch gekennzeichnet,

- daß für die Herstellung eines insbesondere für die Fertigung eines Bepflanzungsträgers außerhalb des Erdbodens geeigneten Produkts die Gesamtheit der Transportmerkmale des mitgenommenen Materials so geregelt wird, daß ein kontrollierter Zerfaserungsgrad erreicht wird, der es ermöglicht, am Ausgang der Maschine (1) eine Mischung (31) aus isolierten Fasern und agglomerierten Bündeln aus teilweise zerfaserten Fasern mit verschiedener Länge und Granulometrie zu erhalten,
- daß im Verlauf der Zerfaserung ein klebendes Bindemittel mit einer in Abhängigkeit von der Durchflußmenge des transportierten Materials geregelten Durchflußmenge in die Hülse (11) eingeführt wird, damit es sich in der Fasermischung diskontinuierlich verteilt, und
- daß durch Kontrolle der Temperatur des mitgenommenen Materials die Aushärtung des klebenden Bindemittels so verzögert wird, daß dieses nur nach dem Austritt aus der Maschine (1) geschieht.

2. Verfahren nach Anspruch 1, dadurch gekennzeichnet, daß die Zerfaserungsbedingungen so geregelt werden, daß eine Mischung von Fasern erhalten wird, deren Länge von einigen μm bis zu ungefähr 1 cm reichen kann.

3. Verfahren nach Anspruch 2, dadurch gekennzeichnet, daß die erhaltene Mischung aus mehr oder weniger isolierten Fasern, aus Agglomeraten von Fasern und Fäden gebildet wird, deren Granulometrie derart ist, daß wenigstens 60 % der Mischung an dem 14er Sieb zurückgehalten werden und daß der durch das 200er Sieb durchgehende Feingutanteil kleiner als 10 % ist.

4. Verfahren nach Anspruch 1, dadurch gekennzeichnet, daß wenigstens im ersten Teil der Schraubenzerfaserungsmaschine eine fortschreitende Kompression mit Zerreiben und Fraktionierung der Späne durchgeführt wird, in deren Verlauf durch die in der Hülse (11) angeordneten Filtrierteile (15) wenigstens ein Teil des mit den Spänen verbundenen Harzes und Wassers beseitigt wird, um einen Trockenheitsgrad zwischen 0,45 und 0,55 zu erreichen.

5. Verfahren nach einem der vorhergehenden Ansprüche, dadurch gekennzeichnet, daß in der ersten Phase fortschreitender Kompression eine Sterilisation der Späne durch Anhebung ihrer Temperatur auf ein Niveau zwischen 120° C und 140°C durchgeführt wird.

6. Verfahren nach einem der Ansprüche 1 und 5, dadurch gekennzeichnet,
   - daß vor Zuführung des klebenden Bindemittels die Temperatur der mitgenommenen Mischung bis auf ein Niveau gesenkt wird, welches das Aushärten des Bindemittels verhindert, und
   - daß diese Temperatur wenigstens bis zum Austritt aus der Zerfaserungsmaschine (1) aufrechterhalten wird.

7. Verfahren nach einem der vorhergehenden Ansprüche des Typs, welcher darin besteht, der Hülse (11) im Verlauf der Zerfaserung ein oder mehrere flüssige oder feste Zusatzmittel zuzuführen, dadurch gekennzeichnet, daß die Zusatzmittel ein Befeuchtungsprodukt und/oder das Wachstum der Pflanzen begünstigende Mikroorganismen sind.

8. Verfahren nach einem der vorhergehenden Ansprüche, dadurch gekennzeichnet, daß nach dem Austritt aus der Zerfaserungsmaschine eine Abkühlung und Trocknung der Mischung (31) bis auf eine Temperatur unter 50° C und einen Trockenheitsgrad in der Größenordnung von 0,6 durchgeführt wird.

9. Verfahren nach einem der vorhergehenden Ansprüche, dadurch gekennzeichnet, daß die die Zerfaserungsmaschine (1) verlassende Mischung (31) durch Formen und/oder Profilieren zu einem Produkt (33) mit festgelegten Abmessungen und bestimmter Dichte umgeformt wird, dessen Temperatur danach auf ein Niveau über 100°C angehoben wird, so daß die Abmessungen durch Aushärten des Klebemittels fixiert werden.

10. Verfahren nach Anspruch 9, dadurch gekennzeichnet, daß ein Profilteil (6) kontinuierlich hergestellt und danach in Stücke (7) mit bestimmter Länge geteilt wird.

11. Anlage zur Herstellung einer Verbundmischung aus mehr oder weniger isolierten Fasern und agglomerierten Bündeln aus Fasern mit verschiedener Länge und Granulometrie, die als Bepflanzungsträger geeignet ist und durch teilweise Zerfaserung von Holzspänen (3) oder von einem anderen holzzellulosehaltigen Material in Stücken erhalten wird, des Typs, welcher eine Zerfaserungsmaschine (1) mit wenigstens zwei parallelen Schrauben (2) aufweist, welche im Inneren einer sie umhüllenden Hülse in Drehung versetzt werden und mit schraubenförmigen Gewinden versehen sind, die für die Mitnahme von Spänen (3) zwischen einem stromaufwärts gelegenen Ende und einem stromabwärts gelegenen Ende der Hülse (11) ineinander eingreifen, wobei die Enden mit einer Zuführöffnung (13) für die Späne (3) und jeweils mit einer Abführöffnung (14) für das Material nach der Zerfaserung (31) versehen sind,
  - wobei die Schrauben von aufeinanderfolgenden, aneinandergefügten Zonen gebildet sind, welche mit Gewinden mit verschiedenen aufeinanderfolgend in eine Richtung gerichteten und dann entgegengesetzten Steigungen (21, 22, 24, 25) versehen sind,
  - wobei die Gewinde mit entgegengesetzten Steigungen mit Fenstern (23) versehen sind,
  - wobei die Filtrierteile (15) in der Hülse (11) angeordnet sind,
  - wobei die Schrauben in der Vorschubrichtung des Materials
    - - eine erste Mitnahmezone (A) in Stromabwärtsrichtung mit fortschreitender Kompression und Beseitigung von wenigstens einem Teil des den Spänen (3) zugeordneten Wassers quer durch die Filtrierteile,
    - - eine erste Bremszone (B), die Gewinde (22) mit entgegengesetzter Steigung aufweist, und
    - - eine Mitnahme- und Beseitigungszone für die erhaltene Mischung bilden,
    - - wobei die Anlage eine Kontrolleinrichtung für die Temperatur des mitgenommenen Materials aufweist,
  dadurch gekennzeichnet,
  - daß es nur eine zusätzliche Mitnahmezone (C) und eine zusätzliche Bremszone (D) mit entgegengesetzter Steigung mit Fenstern gibt, welche schmäler als die der ersten Bremszone (B) sind, und
  - daß sie
    - - eine Einrichtung (17) zum Einführen eines klebenden Bindemittels mit kontrollierbarer Aushärtung in die Maschine (1) mit einer regelbaren Durchflußmenge in Abhängigkeit der Transportbedingungen in den Schrauben aufweist, damit es sich diskontinuierlich in der Fasermischung verteilt, und
    - - eine dritte Mitnahme- und Beseitigungszone (E) für die erhaltene Mischung aufweist.

12. Anlage nach Anspruch 11, dadurch gekennzeichnet, daß die Maschine (1) mit einer Einrichtung (26) zum Regulieren der Temperatur des mitgenommenen Materials auf ein Niveau ausgestattet ist, welches seine Sterilisation in einer stromaufwärts von der Einspritzzone des klebenden Bindemittels angeordneten Zone ermöglicht.

13. Anlage nach Anspruch 11, dadurch gekennzeichnet, daß die Maschine (1) mit einer Einrichtung (27) zum Regulieren der Temperatur des mitgenommenen Materials auf ein Niveau von unter 100° C von der Klebemitteleinspritzzone (C) bis zum Ausgang der Maschine ausgestattet ist.

14. Anlage nach Anspruch 11, dadurch gekennzeichnet, daß die Fenster (33) der Gewinde (22) mit entgegengesetzter Steigung eine Breite in der Größenordnung von 15 bis 20 mm in der ersten Bremszone (B) und von 12 bis 15 mm in der zweiten Bremszone (D) haben.

15. Anlage nach einem der Ansprüche 10 und 11, dadurch gekennzeichnet, daß sie nach dem Ausgang der Zerfaserungsmaschine (1) eine Einrichtung (5) zur Verteilung und Umformung der Fasermischung (31) in Form von wenigstens einem Block (7) mit festgelegten und im wesentlichen konstanten Abmessungen aufweist.

16. Anlage nach einem der Ansprüche 10 und 11, dadurch gekennzeichnet, daß sie eine Einrichtung (4) zur schnellen Abkühlung und teilweisen Trocknung der Mischung (31) zwischen der Zerfaserungsmaschine (1) und der Formungseinrichtung (5) aufweist.

17. Anlage nach Anspruch 16, dadurch gekennzeichnet, daß die Einrichtung zur schnellen Abkühlung und Trocknung der Mischung (31) eine von einem Gasstrom durchströmte Transporthülle (42) aufweist, welche an ihrem stromaufwärts gelegenen Ende mit einer Zuführöffnung (41) für die die Zerfaserungsmaschine (1) verlassende Mischung (31) versehen ist und an ihrem stromabwärts gelegenen Ende in einen Zyklon (4) mündet, der einen Austrittsabzug (44) für das mit Feuchtigkeit beladene Gas und eine untere Austrittsöffnung (45) für die abgekühlte und getrocknete Mischung (32) aufweist.

18. Anlage nach Anspruch 15, dadurch gekennzeichnet, daß die Verteilungs- und Formungseinrichtung (5) einen Vibriertisch (51) aufweist, der kontinuierlich mit der Mischung (32) für deren Verdichtung beschickt wird und an den sich ein Formungstisch (52) anschließt, der mit einer Einrichtung zum Profilieren der Mischung (33) in Form eines kontinuierlichen Barrens (6) mit festgelegter Breite und Dicke ausgestattet ist.

19. Anlage nach Anspruch 15, dadurch gekennzeichnet, daß der Formungstisch (52) mit einer Kompressionseinrichtung (53) für die Mischung (33) zur Erreichung einer festgelegten Dicke und Dichte verbunden ist.

20. Anlage nach Anspruch 18, dadurch gekennzeichnet, daß auf den Formungstisch (52) eine Einrichtung (55) zum Schneiden des kontinuierlichen Barrens (6) in Abschnitte (7) festgelegter Länge folgt.

21. Anlage nach einem der Ansprüche 17 bis 20, dadurch gekennzeichnet, daß auf den Formungstisch (52) eine Zone (54) zur Trocknung und Aushärtung des klebenden Bindemittels durch Erwärmung des Barrens (6) auf eine Polymerisationstemperatur in der Größenordnung von 130° C folgt.

22. Bepflanzungsträger, insbesondere für eine Bepflanzung außerhalb des Erdbodens, welcher aus holzzellulosehaltigen Teilchen gebildet ist, die durch Zerfaserung von Holzspänen erhalten werden und durch ein Bindemittel so verbunden sind, daß eine belüftete und relativ steife Struktur gebildet wird, dadurch gekennzeichnet,
   - daß er aus einer verschlungenen Mischung (31) aus isolierten Holzfasern und agglomerierten Bündeln aus Fasern mit verschiedener Länge und Granulometrie derart gebildet ist, daß wenigstens 60 % der Mischung durch ein 14-Mesh-Sieb zurückgehalten wird und daß der durch das 200-Mesh-Sieb durchgehende Feingutanteil kleiner als 10 % ist, wobei die Elemente der Mischung miteinander diskontinuierlich durch im Abstand angeordnete Klebepunkte (37) verbunden sind, und
   - daß er die Form eines massiven profilierten Abschnitts (7) mit festgelegtem Querschnitt und festgelegter Länge hat.

23. Bepflanzungsträger nach Anspruch 22, dadurch gekennzeichnet, daß jeder Abschnitt (7) in einer geschlossenen, von einer Folie aus synthetischem Material gebildeten Umhüllung angeordnet ist, welche die Flüssigkeiten zurückhalten kann.

24. Bepflanzungsträger nach Anspruch 23, dadurch gekennzeichnet,
   - daß die Abschnitte in trockenem Zustand gelagert, transportiert und geliefert werden und
   - daß nach dem Verlegen jedes Abschnitts an einem gewünschten Ort dieser mit im bestand angeordneten Löchern zum Setzen der Stecklinge versehen wird, deren Wurzeln sich in dem Träger unter Einwirkung einer in die Umhüllung eingeführten Nährflüssigkeit entwickeln.

FIG.1

FIG.2

FIG.3

FIG.4

FIG.5